# EUROPEAN PATENT APPLICATION

(11) **EP 4 508 956 A2**
(43) Date of publication of application: **19.02.2025**
(21) Application number: 24213883.2
(22) Date of filing: 22.05.2019
(51) Int. Cl.: A01B 21/08

(54) **AGRICULTURAL DISC BLADE WITH STEP PLANE NOTCH EDGE**

(62) Divisional of application: 19929358.0
(71) Applicant: Osmundson Mfg.Co., Perry, IA 50220 (US)
(72) Inventor: BRUCE, Douglas G., West Des Moines, 50266 (US)
(74) Representative: Dentons UK and Middle East LLP

(57) **Abstract**

A ground engaging agricultural blade, coulter, or disc having a central opening adapted to be attached to an implement for rotation about a substantially horizontal axis of rotation; the coulter or disc have an outer periphery; and plurality of step plane notches disposed in the outer periphery. The blade can be used with a hub disposed around the central opening or a spacer spool on a shaft extending through the central openings of adjacent blades, the spacer spools extending radially outwardly by a distance.

## Description

### FIELD OF THE DISCLOSURE

This disclosure relates generally to an improved ground engaging blade for an agricultural implement such as a tillage disc or coulter, drill or planter, and more particularly to such a blade that, due to this shape, resists throwing and provides a consistent cut.

### BACKGROUND OF THE DISCLOSURE

Coulters are presently used ahead of no-till implements-such as a planter---to fracture a narrow band of soil to prepare the soil to receive the no-till implement. U.S. Pat. No. 7,497,270 to Bruce, which is incorporated herein by reference in its entirety, shows coulters and one way of how they are used to till and open the soil.

A disc can be a flat coulter that is deformed to a convex shape on one side and concave shape on the other side so it will throw soil in one direction as it moves forwardly through the ground. Discs are most often used with a plurality of them side by side in "gangs" or rows as shown in U.S. Pat. No. 6,554,079 to Bruce, which is incorporated herein by reference in its entirety.

Further, U.S. Pat. No. 8,100,194 to Bruce, which is incorporated herein by reference in its entirety, details that because of differences in soil types and differences among crops grown, there is a need for coulters and discs that can be easily adjusted in shape at the time of manufacture to conform to the conditions anticipated in the field. One such condition is difficult soil types with excess rocks and residue which results in an inconsistent cut made by the coulter or a soil type or crop type in which throwing is disfavored. As such, there is a need in the art for a coulter which provides a consistent cut and reduces throwing.

### BRIEF SUMMARY OF THE DISCLOSURE

The disclosure relates to an apparatus for an agricultural implement blade. The blade is a disc or coulter that is generally circular with an outer periphery. A plurality of step plane notches are disposed in the outer periphery of the disc, each of the plurality of step plane notches tapering from a predetermined thickness on a radial inside to a thinner generally sharped edge at the radially outermost part thereof. In one embodiment of the disclosure, each step plane notch has a uniformly deep and sharpened edge so as to provide consistent penetration and residue sizing of the ground with a reduced amount of soil throwing. The disc can be generally curved, a flat coulter, or a disc that is convex on one side and concave on the other side.

### BRIEF DESCRIPTION OF THE DRAWINGS

The above needs are at least partially met through provision of the apparatus described in the following detailed description, particularly when studied in conjunction with the drawings, wherein:
FIG. 1 is a perspective view of the convex side of the concave/convex disc made in accordance with the disclosure;
FIG. 2 is a perspective view of the concave side of the disc of FIG. 1;
FIG. 3 is a plan view of the convex side of the disc of FIGS. 1 and 2;
FIG. 4 is a side elevational view of the disc of FIGS. 1-3, but with a hub attached to a bent axle;
FIG. 5 is an enlarged side elevational view of the hub of FIG. 6 from the left side of FIG. 4;
FIG. 6 is an exploded, partial perspective view of the disc and hub shown in FIG. 4;
FIG. 7 is a side elevational view of two of the discs of FIGS. 1-3 shown with a spacer spool between adjacent discs;
FIG. 8 is a schematic view of part of a gang of discs with spacer spools between adjacent discs showing the direction that the discs throw dirt when pulled through an agricultural field;
FIG. 9 is a coulter version of the present disclosure;
FIG. 10 is a side elevational view of the coulter of FIG. 9 with a hub of the type shown in FIGS. 4-6 attached thereto;
FIG. 11 shows a gang of coulters of the type shown in FIG. 9 disposed on a shaft with spacer spools disposed between adjacent coulters;
FIG. 12 is a cross sectional view taken along line **13-13** of FIG. 3; and
FIG. 13 is a cross sectional view taken along line **15-15** of FIG. 9.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present disclosure. Also, common but well-understood elements that are useful or necessary in a commercially feasible embodiment are often not depicted in order to facilitate a less obstructed view of these various embodiments of the present disclosure. Certain actions and/or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### DETAILED DESCRIPTION

In the following detailed description of the embodiments, reference is made to the accompanying drawings which form a part hereof, and in which is shown by way of illustration specific preferred embodiments in which the disclosure may be practiced. These embodiments are described in sufficient detail to enable those skilled in the art to practice the disclosure, and it is to be understood that other embodiments may be utilized and that mechanical, procedural, and other changes may be made without departing from the spirit and scope of the present disclosures. The following detailed description is, therefore, not to be taken in a limiting sense, and the scope of the present disclosure is defined only by the appended claims, along with the full scope of equivalents to which such claims are entitled.

As used herein, the terminology such as vertical, horizontal, top, bottom, front, back, end and sides are referenced according to the views presented. It should be understood, however, that the terms are used only for purposes of description, and are not intended to be used as limitations. Accordingly, orientation of an object or a combination of objects may change without departing from the scope of the disclosure.

### Agricultural Blade

As stated above, the agricultural blade apparatus comprises an agricultural blade **10.** Each blade **10** may be of any diameter and thickness and may be constructed out of any suitable material. In preferred embodiment, the blade **10** is of a diameter that is preferably 17 inches to 40 inches. In a still further preferred embodiment, the blade **10** is preferably 0.180 inches to 0.5inches in thickness. However, the agricultural blade may be of any diameter and thickness without departing from the scope of the disclosure. In a still further embodiment, the blade **10** is constructed out of any suitable material, including, but not limited to, metal, steel, hard plastics, and the like. Each blade **10** further comprises an outer periphery **18.**

### Disc

As stated above, the agricultural blade apparatus comprises an agricultural blade **10.** In an embodiment of the agricultural blade apparatus, the agricultural blade **10** is a disc **12,** which may be convex on one side and concave on the other side. Each disc **12** may be of any diameter and thickness and may be constructed out of any suitable material. In preferred embodiment, the disc **12** is of a diameter that is preferably 17 inches to 40 inches. In a still further preferred embodiment, the disc **12** is preferably 0.180 inches to 0.5 inches in thickness. However, the disc may be of any diameter and thickness without departing from the scope of the disclosure. In a still further embodiment, the disc **12** is constructed out of any suitable material, including, but not limited to, metal, steel, hard plastics, and the like. Each disc **12** further comprises an outer periphery **18.**

### Coulter

As stated above, the agricultural blade apparatus comprises an agricultural blade **10.** In an embodiment of the agricultural blade apparatus, the agricultural blade **10** is a coulter **14,** which is substantially flat. Each coulter **14** may be of any diameter and thickness and may be constructed out of any suitable material. In a preferred embodiment, the coulter **14** is of a diameter that is preferably 17 inches to 40 inches. In a still further preferred embodiment, the coulter **14** is preferably 0.125 inches to 0.5 inches in thickness. In a still further embodiment, the coulter **14** is constructed out of any suitable material, including, but not limited to, metal, steel, hard plastics, and the like. Each coulter **14** further comprises an outer periphery **18.**

### Step Plane Notch

As stated above, the agricultural blade apparatus comprises an agricultural blade **10.** In an embodiment of the agricultural blade apparatus, the agricultural blade **10** further comprises a step plane notch **16,** and preferably a plurality of step plane notches **16** disposed in the outer periphery **18** of the agricultural blade **10.** In a preferred embodiment, the agricultural blade comprises at least five step plane notches **16.** The angle of opening of each notch **16** disposed in the outer periphery **18** is preferably 80 degrees to 135 degrees, or any angle which is suitable for reduction of throwing and promotion of consistent cuts. It is to be understood that the notches **16** can be of other shapes and sizes. It is preferable that each notch **16** be the same shape to promote uniform wear. Further, it is preferable that the plurality of notches **16** are equally spaced in the outer periphery **18.** In a preferred embodiment, spacing should be provided such that each third of the agricultural blade **10** contains at least one notch, preferably at least one and half notches, and preferably at least two notches.

Additionally, as stated above, the agricultural blade apparatus comprises an agricultural blade **10** wherein the agricultural blade **10** comprises a step plane notch **16,** and preferably a plurality of step plane notches **16** disposed in the outer periphery **18** of the agricultural blade **10.** In one arrangement, as one example, the agricultural blade **10** comprises a plurality of step plane notches **16** wherein every other step plane notch **16** is sharpened on the opposite side. In another arrangement, the agricultural blade **10** comprises a plurality of step plane notches **16** wherein every step plane notch **16** is sharpened on both sides. In yet another arrangement, the agricultural blade **10** comprises a plurality of step plane notches **16** wherein every step plane notch **16** is sharpened on the same side. Any variation of sharpening the step plane notches **16** including, but not limited to, every step plane notch **16** being sharpened alike or each step plane notch **16** being sharpened in its own unique manner (i.e., being sharpened on one side, being sharpened on both sides, etc.) may be utilized by the agricultural blade apparatus without departing from the disclosure. Furthermore, the step plane notches **16** remain sharp longer than other blades.

Furthermore, the agricultural blade **10** comprises a plurality of step plane notches **16** which may be uniform in depth **40** and sharpness so that any forces applied to the outer periphery **18** will be transmitted evenly so as to avoid inconsistency in the cut made by the blade **10,** whether it is a disc or a coulter. In another embodiment, the agricultural blade **10** comprises a plurality of step plane notches **16** that may vary in depth **40** and sharpness. In one embodiment, the agricultural blade **10** comprises a plurality of step plane notches **16** wherein each step plane notch **16** comprises a depth **40** which is 50% or less of the width 42 of the notch **16.** In one embodiment, as one example, the agricultural blade **10** comprises a plurality of step plane notches **16** of varying depths, but each step plane notch **16** comprises a depth **40** which is 50% or less of the width **42** of the respective notch **16.**

### Central Opening, Shaft, and Axle

Each of the agricultural blades **10** is provided with a central opening **20** which receives the shaft **32.** In an alternative embodiment, each of the agricultural blades **10** is provided with a central opening **20** which receives the axle **22.** The central opening **20** may be of any suitable size, shape, and design, so as to accommodate receipt of the shaft **32.** Similarly, the shaft **32** and axle **22** may be of any suitable size, shape, and design.

### Hub

Each of the agricultural blades **10** is provided with a hub **24** which facilitates receipt of the shaft **32** or axle **22.** The hub may be of any suitable size, shape, and design.

### Spacer Spools

Spacer spool **34** is formed of any suitable size, shape, and design, and is configured to be positioned between adjacent agricultural blades **10** to facilitate proper spacing of the cuts made by the agricultural implement in the soil. Each of the spacer spools **34** comprises a center section and opposite end portions. A shaft opening extends through each of the spacer spools **34.** The end portion can be provided with an annular rim or peripheral portion which is slightly convex so as to be complimentary to the inside curvature of the adjacent disc blade **12** or substantially flat so as to be complimentary to the adjacent coulter blade **14.** The opposite end portion is also provided with an annular rim or peripheral portion which is slightly concave so as to be complimentary to the outside curvature of the adjacent disc blade **12** or substantially flat so as to be complimentary to the adjacent coulter blade **14.** In an alternative embodiment, one end portion may be slightly smaller in diameter than the opposite end portion since it has been found through experience that the agricultural blades **10** suffer less breakage if spools of different diameters are positioned on opposite sides thereof.

### Threaded Fastener

Threaded fastener **26** is formed of any suitable size, shape, and design, and is configured to tighten against the surface of the hub **24** while also pulling the agricultural blade **10** into firm engagement with the hub **24.** The use of a threaded fastener **26** ensures that a seal is formed with the hub **24** and the agricultural blade **10.**

In the arrangement shown, as one example, the threaded fastener **26** is a generally cylindrical elongated member having a first threaded end and a head. First threaded end and head are in coaxial alignment with one another. That is, the center axis of rotation of the first threaded end and head are in alignment with one another, despite the fact that the diameters or shapes or features of the first threaded end and the head may differ. First threaded end and head may have the same diameter or different diameters.

Also shown in this example is a head positioned in the end of the threaded fastener **26.** Head is any feature or device that allows for the threaded fastener **26** to be grasped and rotation to be imparted on the threaded fastener **26.** In the arrangement shown, as one example, head is generally cylindrical in shape and has a diameter slightly larger than the diameter of the first threaded end. This head includes a plurality of flat surfaces on opposing sides of the head. These flat surfaces allow for a wrench or other tool to grasp the head and impart torque there on. This can be useful during the installation process. It is hereby contemplated for use that head can take on any other form, such as a hex-head member, a square head member, a recessed hexagonal socket, a recessed square socket, a recessed flat head feature that receives a flat head screw driver, a recessed Philips head feature that receives a Phillips head screw driver, a slot, a pair of crossed slots, or any other feature that can be used to impart rotation. In this arrangement, when the first threaded end is inserted within the hub **24,** the head extend outward from the hub **24** thereby facilitating easy access to the head. In this arrangement, once the first threaded end is inserted into the hub **24,** a tool grasps the head thereby imparting rotation on threaded fastener **26** or preventing rotation of the threaded fastener **26.**

### Nut

Also shown in this example is a nut **30** positioned in the end of the threaded fastener **26** opposite the head and in coaxial alignment with the head. The nut **30** is any feature or device that allows for the threaded fastener **26** to be grasped and rotation to be imparted on the threaded fastener **26** and remain in firm engagement with the hub **24** and agricultural blade **10.** In the arrangement shown, as one example, the nut **30** is generally cylindrical in shape and has a diameter slightly larger than the diameter of the first threaded end. The nut **30** includes a plurality of flat surfaces on opposing sides of the nut **30.** These flat surfaces allow for a wrench or other tool to grasp the nut **30** and impart torque there on. This can be useful during the installation process. It is hereby contemplated for use that nut **30** can take on any other form, such as a hex-head member, a square head member, or any other feature that can be used to impart rotation. In this arrangement, when the first threaded end is inserted within the hub **24** and the nut **30,** wherein the nut extend outward from the agricultural blade **10** thereby facilitating easy access to the nut **30.** In this arrangement, once the first threaded end is inserted into the nut **30,** a tool grasps the nut **30** thereby imparting rotation on nut **30** or preventing rotation of the threaded fastener **26.**

### In Operation

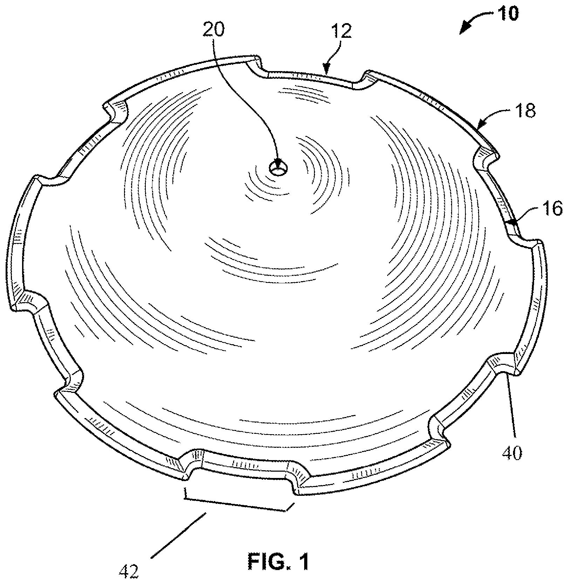

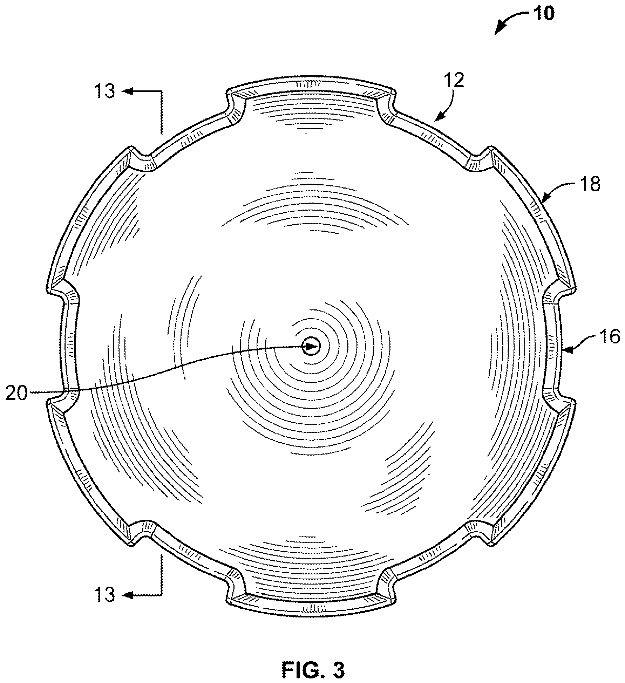

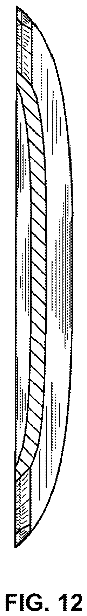

Referring now to FIGS. 1-3 and 12, an agricultural blade **10** has a plurality of step plane notches **16** disposed in the outer periphery **18** of the disc **12** or coulter **14.** The cross section shown in FIG. 12 shows a cross section of the disc **12** and step plane notches **16.**

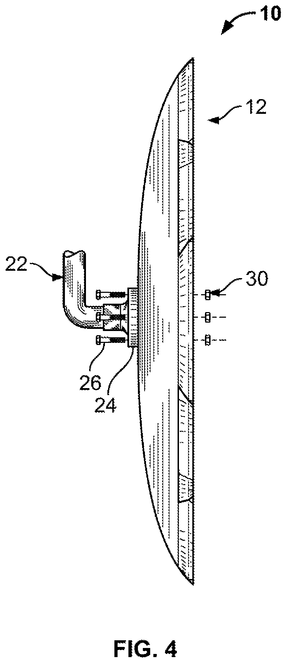

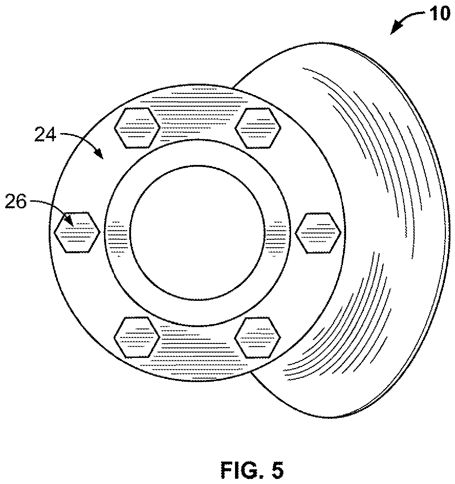

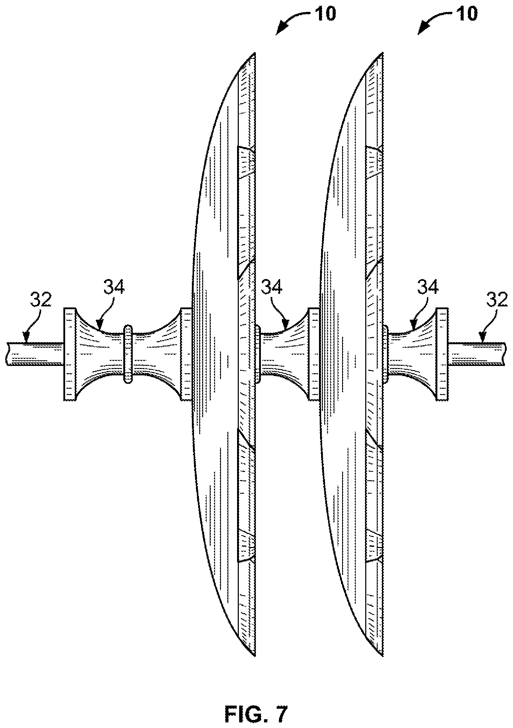

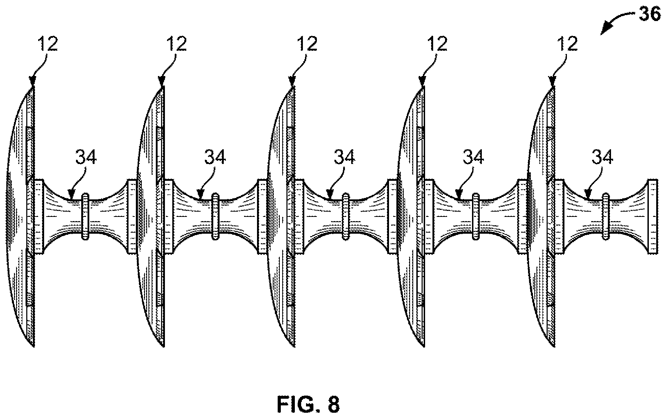

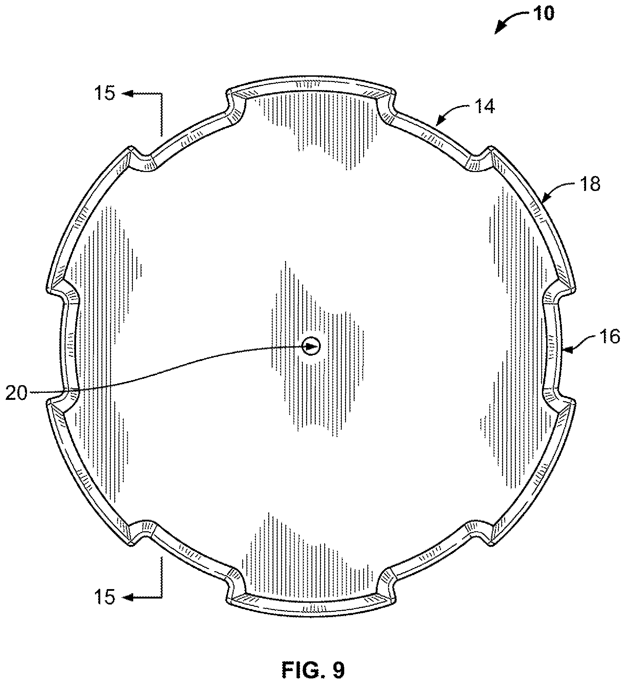

An important distinction between the agricultural blade **10** and prior art agricultural blades is that the step plane notches **16** are uniform in depth and sharpness so that any forces applied to the outer periphery **18,** will be transmitted evenly so as to avoid inconsistency in the cut made by the blade, whether it is a disc or a coulter. In a preferred embodiment, the disc **12** or coulter **14** is connected to a mounting apparatus such as hub **24** (FIGS. 4-6) on bent axle **22** or a spacer spool **34** (FIGS. 7 and 8) that separate and hold in place the discs **12** along a shaft **32** which provides rotation about an axis of rotation. In an embodiment, the axis of rotation is substantially horizontal. The disc gang **36** shown in FIG. 9 or the coulter gang **38** shown in FIG. 12 could have a non-circular center opening with a complementary shaped shaft in the non-circular center opening so that the shaft and discs or coulters all rotate together as a unit. In an embodiment of the disclosure, a spacer spool **34** is disposed on a shaft **32** between two of the discs **12** or between two of the coulters **14** and the spacer spool **34** extends radially outwardly by a distance.

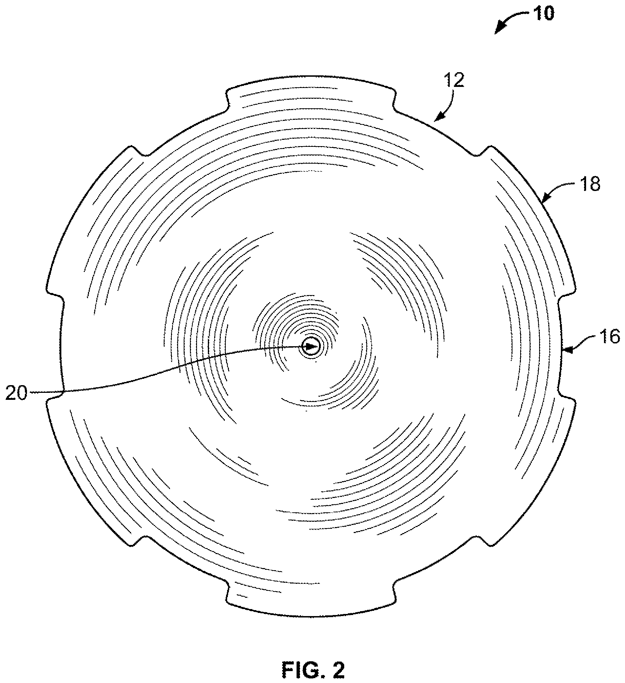

Additionally, as described above, FIG. 1 is a perspective view of a concave/convex disc made in accordance with the disclosure. However, in another embodiment, the side shown of the disc in FIG. 1 may be concave without departing from the disclosure. Furthermore, as described above, FIG. 2 is a perspective view of a concave/convex disc. However, in another embodiment, the side shown of the disc in FIG. 2 may be convex without departing from the disclosure.

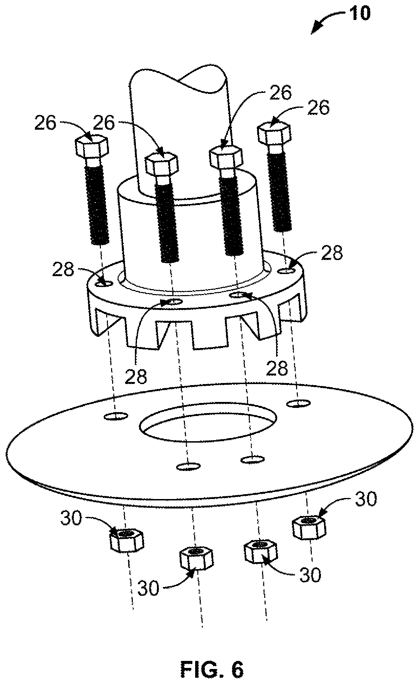

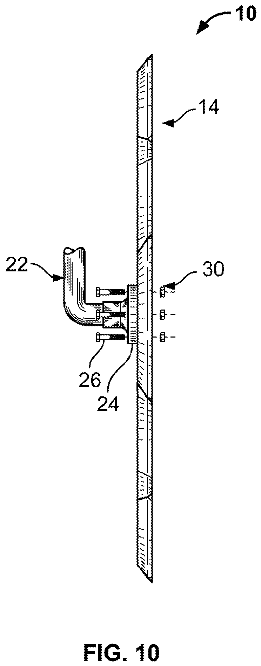

FIG. 6 shows that the hub **24** is preferably attached to the disc **12** around a central opening **20** by placing threaded fasteners **26,** such as bolts, through substantially aligned holes **28** in the hub **24,** through substantially aligned holes **28** extending through the disc **12** or coulter **14** to make sure that the hub **24** is securely fastened to the disc **12.** Nuts **30** are threadably attached to the ends of the threaded fasteners **26** to hold the hub **24** to the disc **12.** FIGS. 4-6 show that the hub **24** conforms to the surface of the disc **12.** The hub **24** shown in FIG. 10 is preferably of the same configuration as that shown in FIGS. 4-6. In an embodiment, the central opening is adapted to be attached to an agricultural implement, such as a disc harrow, disc seeder, or planter.

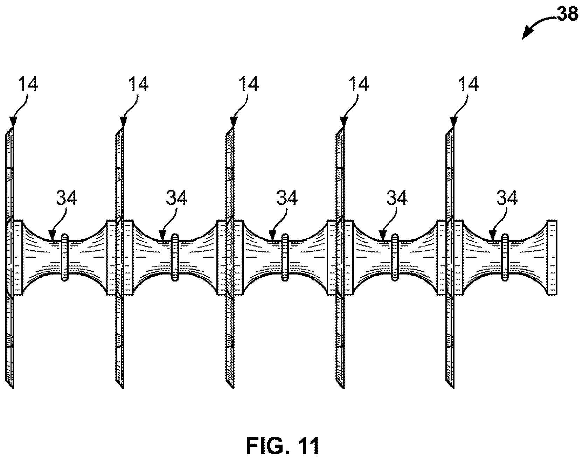

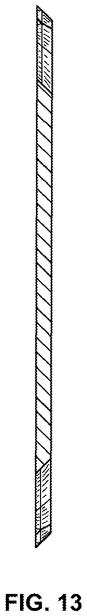

A second embodiment of the disclosure, shown by example only, is a coulter **14** shown in FIGS. 9-11 and 13. The only difference between the coulter **14** of FIGS. 9-11 and 13 and the disc **12** of FIGS. 1-3 is that the coulter **14** is primarily flat, whereas the disc **12** may be convex on one side and concave on the other side.

Those skilled in the art will recognize that a wide variety of modifications, alterations, and combinations can be made with respect to the above described embodiments without departing from the spirit and scope of the disclosure, and that such modifications, alterations, and combinations are to be viewed as being within the ambit of the inventive concept as expressed by the attached claims. Aspects of the disclosure are set out in the following numbered clauses:
Clause 1. A ground engaging agricultural tillage blade comprising:
   a disc having a central opening adapted to be attached to an implement for rotation about an axis of rotation;
   the disc having an outer periphery; and
   a plurality of scalloped notches in the disc from a location substantially at the outer periphery to the central opening.
Clause 2. The agricultural tillage blade of clause 1, wherein the scalloped notches are of uniform depth.
Clause 3. The agricultural tillage blade of clauses 1-2, wherein the disc is convex on one side and concave on the other.
Clause 4. The agricultural tillage blade of clauses 1-2, wherein the disc is substantially flat.
Clause 5. The agricultural tillage blade of clauses 1-4, wherein a hub is attached to the disc around the central opening.
Clause 6. The agricultural tillage blade of clauses 1-5, wherein substantially aligned holes are disposed through the blade and through the hub and threaded fasteners extend through the aligned holes for holding the hub fixed to the blade.
Clause 7. The agricultural tillage blade of clauses 1-6, wherein a spacer spool is disposed on a shaft between two of the discs and the spacer spool extends radially outwardly by a distance.
Clause 8. A ground engaging agricultural tillage blade apparatus comprising:
   a disc having a central opening adapted to be attached to an implement for rotation about an axis of rotation;
   the disc having an outer periphery;
   a plurality of scalloped notches in the disc from a location substantially at the outer periphery to the central opening; and
   a hub being attached to the disc around the central opening.
Clause 9. The agricultural tillage blade apparatus of clause 8, wherein substantially aligned holes are disposed through the blade and through the hub and threaded fasteners extend through the aligned holes for holding the hub fixed to the blade.
Clause 10. The agricultural tillage blade apparatus of clauses 8-9, further comprising at least two discs.
Clause 11. The agricultural tillage blade apparatus of clauses 8-10, wherein a spacer spool is disposed on a shaft between two of the discs and the spacer spool extends radially outwardly by a distance.
Clause 12. The agricultural tillage blade apparatus of clauses 8-11, wherein the scalloped notches are of uniform depth.
Clause 13. The agricultural tillage blade apparatus of clauses 8-12, wherein the disc is convex on one side and concave on the other.
Clause 14. The agricultural tillage blade apparatus of clauses 8-12, wherein the disc is substantially flat.
Clause 15. A ground engaging agricultural tillage blade apparatus comprising:
   at least two discs, each having a central opening adapted to be attached to an implement for rotation about a substantially horizontal axis of rotation;
   each disc having an outer periphery; and
   a plurality of scalloped notches in each disc from a location substantially at the outer periphery to the central opening; and
   wherein a spacer spool is disposed on a shaft between the at least two discs, the spacer spool extending radially outwardly from the center opening.
Clause 16. The agricultural tillage blade apparatus of clause 15, wherein the scalloped notches are of uniform depth.
Clause 17. The agricultural tillage blade apparatus of clauses 15-16, wherein each disc is convex on one side and concave on the other.
Clause 18. The agricultural tillage blade apparatus of clauses 15-16, wherein each disc is substantially flat.
Clause 19. The agricultural tillage blade apparatus of clauses 15-18, wherein a hub is attached to each disc around a central opening.
Clause 20. The agricultural tillage blade apparatus of clauses 15-19, wherein substantially aligned holes are disposed through each disc and through the hub and threaded fasteners extend through the aligned holes for holding the hub fixed to each disc.

## Claims

1. A ground engaging agricultural tillage blade comprising:
a disc having a central opening adapted to be attached to an implement for rotation about an axis of rotation;
the disc having an outer periphery; and
a plurality of step plane notches in the disc from a location substantially at the outer periphery to the central opening,
wherein the step plane notches are sharpened.

2. The agricultural tillage blade of claim 1, wherein every other step plane notch is sharpened on an opposite side.

3. The agricultural tillage blade of claims 1-2, wherein the disc is convex on one side and concave on the other.

4. The agricultural tillage blade of claims 1-2, wherein the disc is substantially flat.

5. The agricultural tillage blade of claims 1-4, wherein a hub is attached to the disc around the central opening.

6. The agricultural tillage blade of claims 1-5, wherein substantially aligned holes are disposed through the blade and through the hub and threaded fasteners extend through the aligned holes for holding the hub fixed to the blade.

7. The agricultural tillage blade of claims 1-6, wherein a spacer spool is disposed on a shaft between two of the discs and the spacer spool extends radially outwardly by a distance.

8. The agricultural tillage blade of claim 1 further comprising a hub being attached to the disc around the central opening.

9. The agricultural tillage blade apparatus of claim 8, wherein substantially aligned holes are disposed through the blade and through the hub and threaded fasteners extend through the aligned holes for holding the hub fixed to the blade.

10. The agricultural tillage blade apparatus of claims 8-9, further comprising at least two discs.

11. The agricultural tillage blade apparatus of claims 8-10, wherein a spacer spool is disposed on a shaft between two of the discs and the spacer spool extends radially outwardly by a distance.

12. The agricultural tillage blade of claim 1 further comprising at least two discs and wherein a spacer spool is disposed on a shaft between the at least two discs, the spacer spool extending radially outwardly from the center opening.

13. The agricultural tillage blade apparatus of claim 12, wherein substantially aligned holes are disposed through each disc and through the hub and threaded fasteners extend through the aligned holes for holding the hub fixed to each disc.

14. The agricultural tillage blade apparatus of claim 1, wherein all step plane notches are sharpened on the same side.

15. The agricultural tillage blade apparatus of claim 1, wherein the outer periphery is sharpened.
